# EUROPÄISCHE PATENTSCHRIFT

(11) **EP 0 643 084 B1**
(45) Veröffentlichungstag und Bekanntmachung des Hinweises auf die Patenterteilung: **10.03.1999**
(21) Anmeldenummer: 94113846.3
(22) Anmeldetag: 03.09.1994
(51) Int. Cl.: C08F 295/00, C08F 4/622, C08F 297/08, C08F 10/00

(54) **Verfahren zur Herstellung von mehrphasigen Homo- oder Copolymerisaten von C2-C10-Alk-1-enen in einer Reaktionszone**
Process for producing multi-phase homo- or copolymers of C2-C10-alkenes in one reaction zone
Procédé de préparation d'homo- ou compolymères multiphases d'alcènes en C2-C10 dans une zone réactionelle unique

(30) Priorität: 10.09.1993 DE 4330667
(43) Veröffentlichungstag der Anmeldung: 15.03.1995
(73) Patentinhaber: BASF Aktiengesellschaft, 67063 Ludwigshafen (DE)
(72) Erfinder: Seelert, Stefan, Dr., D-67227 Frankenthal (DE); Langhauser, Franz, Dr., D-67098 Bad Dürkheim (DE); Kerth, Jürgen, Dr., D-67316 Carlsberg (DE); Müller, Patrik, Dr., D-67661 Kaiserslautern (DE); Fischer, David, Dr., D-67161 Gönnheim (DE); Schweier, Günther, Dr., D-67159 Friedelsheim (DE)

(56) Entgegenhaltungen:
- EP-A- 0 232 595
- EP-A- 0 439 964
- EP-A- 0 516 018
- EP-A- 0 536 104
- WO-A-92/15619

## Beschreibung

Die vorliegende Erfindung betrifft ein Verfahren zur Herstellung von mehrphasigen Homo- oder Copolymerisaten von C₂-C₁₀-Alk-1-enen.

Weiterhin betrifft die vorliegende Erfindung die Verwendung der nach dem erfindungsgemäßen Verfahren erhaltenen Homo- oder Copolymerisate zur Herstellung von Folien, Fasern oder Formkörpern.

Mehrphasige Homo- oder Copolymerisate von C₂-C₁₀-Alk-1-enen werden üblicherweise durch ein mehrstufiges Polymerisationsverfahren hergestellt, wobei zunächst das in einer ersten Reaktionszone erhaltene Polymerisat in eine zweite Reaktionszone übergeführt wird, wo diesem ein Gemisch von einem oder mehreren C₂-C₁₀-Alk-1-enen hinzupolymerisiert wird. Auf diese Weise bildet sich in der zweiten Reaktionszone ein Gemisch aus zwei verschiedenen Polymerisaten. Unter Umständen kann das aus der zweiten Polymerisationszone erhaltene Gemisch noch in eine oder mehrere weitere Reaktionszonen eingebracht werden, wo weitere C₂-C₁₀-Alk-1-ene hinzupolymerisiert werden (DE-A 40 04 087, DE-A 40 19 453).

Die bisher bekannten Verfahren sind verfahrenstechnisch relativ aufwendig, da einerseits die Reaktorführung in den einzelnen Reaktionszonen aufeinander abgestimmt werden muß und andererseits die Überführung von Polymerisaten von einer Reaktionszone in die andere regeltechnisch mit einigen Schwierigkeiten verbunden ist. Darüber hinaus erfordern derartige mehrstufige Verfahren stets eine sehr aufwendige Apparatur, die mit erheblichen Investitionskosten verbunden ist.

Aufgabe der vorliegenden Erfindung war es daher, den geschilderten Nachteilen abzuhelfen und ein verfahrenstechnisch weniger aufwendiges Verfahren zur Herstellung von mehrphasigen Homo- oder Copolymerisaten von C₂-C₁₀-Alk-1-enen zu entwickeln.

Demgemäß wurde ein Verfahren zur Herstellung von mehrphasigen Homo- oder Copolymerisaten von C₂-C₁₀-Alk-1-enen gefunden, welches dadurch gekennzeichnet ist, daß in Anwesenheit zweier unterschiedlicher Katalysatorsysteme in einer Reaktionszone polymerisiert wird, wobei eines der Katalysatorsysteme als aktive Bestandteile einen Metallocenkomplex der allgemeinen Formel (I) 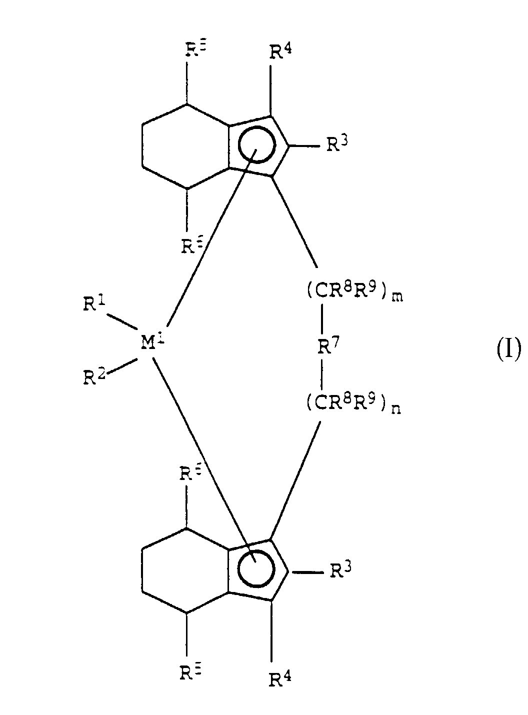 worin
- M¹: ein Metall der Gruppe IVb, Vb oder VIb des Periodensystems ist,
- R¹ und R²: gleich oder verschieden sind und ein Wasserstoffatom, eine C₁-C₁₀-Alkylgruppe, eine C₁-C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe, eine C₈-C₄₀-Arylalkenylgruppe oder ein Halogenatom bedeuten,
- R³ und R⁴: gleich oder verschieden sind und ein Wasserstoffatom, ein Halogenatom, eine C₁-C₁₀-Alkylgruppe, die halogeniert sein kann, eine C₆-C₁₀-Arylgruppe, einen -NR₂¹⁰, -SR¹⁰, -OSiR₃¹⁰ -SiR₃¹⁰ oder -PR₂¹⁰-Rest bedeuten, worin R¹⁰ ein Halogenatom, eine C₁-C₁₀-Alkylgruppe oder eine C₆-C₁₀-Arylgruppe ist.
- R⁵ und R⁶: gleich oder verschieden sind und die für R³ und R⁴ genannte Bedeutung haben, mit der Maßgabe, daß R⁵ und R⁶ nicht Wasserstoff sind.
- R⁷: 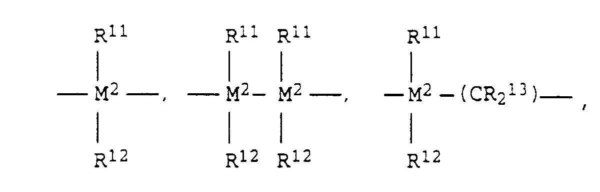 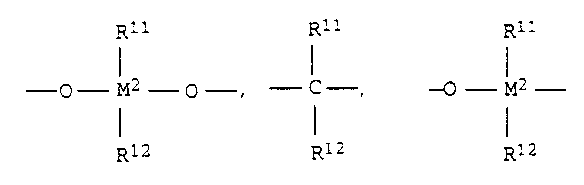 =BR¹¹, =AlR¹¹, -Ge-, -Sn-, -O-, -S-, =SO, =SO₂, =NR¹¹, =CO, =PR¹¹ oder =P-(O)R¹¹ ist,
wobei
- R¹¹, R¹² und R¹³: gleich oder verschieden sind und ein Wasserstoffatom, ein Halogenatom, eine C₁-C₁₀-Alkylgruppe, eine C₁-C₁₀-Fluoralkylgruppe, eine C₆-C₁₀ Arylgruppe, eine C₆-C₁₀-Fluorarylgruppe, eine C₁ C₁₀-Alkoxygruppe, eine C₂-C₁₀-Alkenylgruppe, eine C₇-C₄₀-Arylalkylgruppe, eine C₈-C₄₀-Arylalkenylgruppe, eine C₇-C₄₀-Alkylarylgruppe bedeuten oder R¹¹ und R¹² oder R¹¹ und R¹³ jeweils mit den sie verbindenden Atomen einen Ring bilden,
- M²: Silizium, Germanium oder Zinn ist,
- R⁸ und R⁹: gleich oder verschieden sind und die für R¹¹ genannte Bedeutung haben und
- m und n: gleich oder verschieden sind und null, 1 oder 2 sind, wobei m plus n null, 1 oder 2 ist,
und eine oligomere Aluminiumoxidverbindung enthält.

Dabei steht Alkyl für geradkettiges oder verzweigtes Alkyl. Halogen (halogeniert) bedeutet Fluor, Chlor, Brom oder Jod, bevorzugt Fluor oder Chlor.

Das erfindungsgemäße Verfahren wird zur Herstellung von mehrphasigen Homo- oder Copolymerisaten von C₂-C₁₀-Alk-1-enen, insbesondere von C₂-C₆-Alk-1-enen verwendet. Besonders bevorzugte C₂-C₆-Alk-1-ene sind dabei Ethylen, Propylen, But-1-en, Pent-1-en oder Hex-1-en. Unter der Bezeichnung mehrphasige Homo- oder Copolymerisate von C₂-C₁₀-Alk-1-enen sollen neben drei- und vierphasigen Gemischen insbesondere zweiphasige Gemische aus Homo- oder Copolymerisaten dieser C₂-C₁₀-Alk-1-ene verstanden werden. Als Beispiele für besonders bevorzugte zweiphasige Gemische sind u.a. Copolymerisate des Ethylens oder des Propylens mit anderen Copolymerisaten des Ethylens oder des Propylens zu nennen, wobei in den Copolymerisaten noch untergeordnete Anteile, d.h. bis zu 40 Gew.-%, insbesondere bis zu 30 Gew.-% weiterer C₂-C₆-Alk-1-ene, beispielsweise Propylen, Ethylen, But-1-en, Pent-1-en oder Hex-1-en vorliegen können. Weitere bevorzugte zweiphasige Gemische sind u.a. zwei verschiedene Homopolymerisate des Propylens oder anderer C₂-C₆-Alk-1-ene, oder ein Homopolymerisat des Ethylens oder Propylens mit einem Copolymerisat des Ethylens oder Propylens mit untergeordneten Anteilen, d.h. bis zu 40 Gew.-%, insbesondere bis zu 30 Gew.-% weiterer C₂-C₆-Alk-1-ene.

Als Katalysatorsysteme können nach dem erfindungsgemäßen Verfahren zum einen Ziegler-Natta-Katalysatorsysteme verwendet werden.

Ziegler-Natta-Katalysatorsysteme enthalten u.a. neben einer titanhaltigen Feststoffkomponente noch einen Cokatalysator. Als Cokatalysator kommt dabei eine Aluminiumverbindung in Frage. Vorzugsweise wird neben dieser Aluminiumverbindung als weiterer Bestandteil des Cokatalysators noch eine Elektronendonorverbindung eingesetzt. Die Polymerisation erfolgt dabei in den, in dar Technik üblicherweise für Polymerisationsreaktionen verwendeten Reaktoren, vorzugsweise in der Gasphase.

Zur Herstellung der titanhaltigen Feststoffkomponente werden als Titanverbindungen insbesondere Halogenide oder Alkoholate des drei- oder vierwertigen Titans verwendet, wobei die Chloride des Titans, insbesondere Titantetrachlorid, bevorzugt sind. Vorteilhaft enthält die titanhaltige Feststoffkomponente einen feinteiligen Träger, wofür sich Silicium- und Aluminiumoxide, sowie Aluminiumsilicate der Bruttoformel SiO₂ · aAl₂O₃, wobei a für einen Wert von 0,001 bis 2, insbesondere von 0,01 bis 0,5 steht, gut bewährt haben. Weitere Träger sind u.a. feinteilige Polyolefine, beispielsweise feinteiliges Polypropylen.

Weiter werden bei der Herstellung der titanhaltigen Feststoffkomponente u.a. Verbindungen des Magnesiums eingesetzt. Als solche kommen insbesondere Magnesiumhalogenide, Magnesiumalkyle und Magnesiumaryle, sowie Magnesiumalkoxy- und Magnesiumaryloxyverbindungen in Betracht, wobei bevorzugt Magnesiumdichlorid, Magnesiumdibromid und Magnesiumdi-(C₁-C₁₀-alkyl)-Verbindungen verwendet werden. Daneben kann die titanhaltige Feststoffkomponente noch Halogen, bevorzugt Chlor oder Brom, enthalten.

Ferner enthält die titanhaltige Feststoffkomponente noch Elektronendonorverbindungen, beispielsweise mono- oder polyfunktionelle Carbonsäuren, Carbonsäureanhydride und Carbonsäureester, ferner Ketone, Ether, Alkohole, Lactone, sowie phosphor- und siliciumorganische Verbindungen. Bevorzugt werden als Elektronendonorverbindungen innerhalb der titanhaltigen Feststoffkomponente Phthalsäurederivate der allgemeinen Formel III 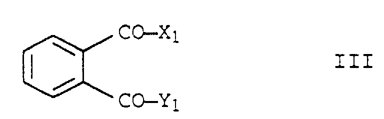 verwendet, wobei X₁ und Y₁ jeweils für ein Chloratom oder einen C₁- bis C₁₀-Alkoxyrest oder gemeinsam für Sauerstoff stehen. Besonders bevorzugte Elektronendonorverbindungen sind Phthalsäureester, wobei X₁ und Y₁ einen C₁-C₈-Alkoxyrest, beispielsweise einen Methoxy-, Ethoxy-, Propyloxy- oder einen Butoxyrest bedeuten.

Weitere bevorzugte Elektronendonorverbindungen innerhalb der titanhaltigen Feststoffkomponenten sind u.a. Diester von 3- oder 4-gliedrigen, gegebenenfalls substituierten Cycloalkyl-1,2-dicarbonsäuren, sowie Monoester von, gegebenenfalls substituierten Benzophenon-2-carbonsäuren.

Als Hydroxyverbindungen werden bei diesen Estern die bei Veresterungsreaktionen üblichen Alkohole verwendet, u.a. C₁- bis C₁₅-Alkanole, C₅- bis C₇-Cycloalkanole, die ihrerseits C₁- bis C₁₀-Alkylgruppen tragen können, ferner C₆- bis C₁₀-Phenole.

Die titanhaltige Feststoffkomponente kann nach an sich bekannten Methoden hergestellt werden. Beispiele dafür sind u.a. in der EP-A 45 975, der EP-A 45 977, der EP-A 86 473, der EP-A 171 200, der GB-A 2 111 066 und der US-A 4 857 613 beschrieben.

Die dadurch erhältliche titanhaltige Feststoffkomponente wird mit Cokatalysatoren als Ziegler-Natta-Katalysatorsystem verwendet. Als Cokatalysatoren kommen dabei Aluminiumverbindungen und weitere Elektronendonorverbindungen in Frage.

Als Cokatalysator geeignete Aluminiumverbindungen sind neben Trialkylaluminium auch solche Verbindungen, bei denen eine Alkylgruppe durch eine Alkoxygruppe oder durch ein Halogenatom, beispielsweise durch Chlor oder Brom, ersetzt ist. Bevorzugt werden Trialkylaluminiumverbindungen verwendet, deren Alkylgruppen jeweils 1 bis 8 C-Atome aufweisen, beispielsweise Trimethyl-, Triethyl- oder Methyldiethylaluminium.

Bevorzugt verwendet man neben der Aluminiumverbindung noch als weiteren Cokatalysator Elektronendonorverbindungen wie beispielsweise mono- oder polyfunktionelle Carbonsäuren, Carbonsäureanhydride und Carbonsäureester, ferner Ketone, Ether, Alkohole, Lactone, sowie phosphor- und siliciumorganische Verbindungen. Bevorzugte Elektronendonorverbindungen sind dabei siliciumorganische Verbindungen der allgemeinen Formel IV

R¹⁴ ₚSi(OR¹⁵)₄₋ₚ IV

wobei
R¹⁴ gleich oder verschieden ist und eine C₁- bis C₂₀-Alkylgruppe, eine 5- bis 7-gliedrige Cycloalkylgruppe, die ihrerseits eine C₁- bis C₁₀-Alkylgruppe tragen kann, oder eine C₆- bis C₂₀-Aryl- oder Arylalkylgruppe bedeutet, R¹⁵ gleich oder verschieden ist und eine C₁- bis C₂₀-Alkylgruppe bedeutet und p für die Zahlen 1, 2 oder 3 steht. Besonders bevorzugt werden dabei solche Verbindungen, in denen R¹⁴ eine C₁- bis C₈-Alkylgruppe oder eine 5- bis 7-gliedrige Cycloalkylgruppe, sowie R¹⁵ eine C₁- bis C₄-Alkylgruppe bedeutet und p für die Zahlen 1 oder 2 steht.

Unter diesen Verbindungen sind insbesondere Dimethoxydiisopropylsilan, Dimethoxyisobutylisopropylsilan, Dimethoxydiisobutylsilan, Dimethoxydicyclopentylsilan, Diethoxyisobutylisopropylsilan und Dimethoxyisopropylsek.butylsilan hervorzuheben.

Bevorzugt werden solche Katalysatorsysteme verwendet, bei denen das Atomverhältnis zwischen Aluminium aus der Aluminiumverbindung und Titan aus der titanhaltigen Feststoffkomponente 10:1 bis 800:1, insbesondere 20:1 bis 200:1, und das Molverhältnis zwischen der Aluminiumverbindung und der als Cokatalysator eingesetzten Elektronendonorverbindung 1:1 bis 100:1, insbesondere 2:1 bis 80:1 beträgt. Die einzelnen Katalysatorbestandteile können in beliebiger Reihenfolge einzeln oder als Gemisch zweier Komponenten in das Polymerisationssystem eingebracht werden.

Weiterhin können im erfindungsgemäßen Verfahren anstelle der Ziegler-Natta-Katalysatorsysteme Katalysatorsysteme verwendet werden, die als aktive Bestandteile von der allgemeinen Formel I und II: 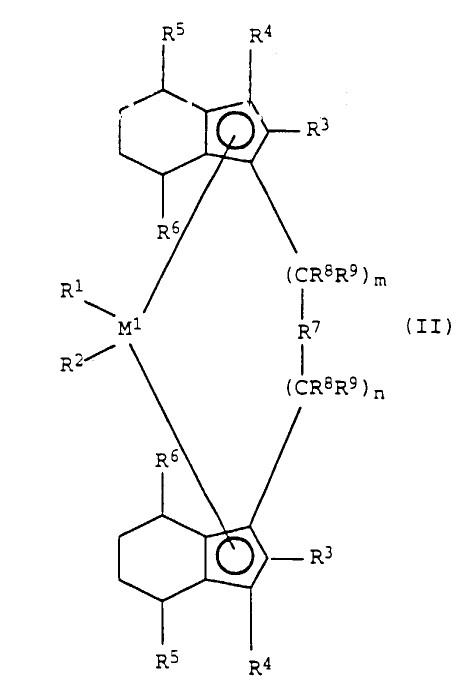 worin
- M¹: ein Metall der Gruppe IVb, Vb des Periodensystems ist,
- R¹ und R²: gleich oder verschieden sind und ein Wasserstoffatom, eine C₁-C₁₀-Alkylgruppe, eine C₁-C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe, eine C₈-C₄₀-Arylalkenylgruppe oder ein Halogenatom bedeuten,
- R³ und R⁴: gleich oder verschieden sind und ein Wasserstoffatom, ein Halogenatom, eine C₁-C₁₀-Alkylgruppe, die halogeniert sein kann, eine C₆-C₁₀-Arylgruppe, einen -NR₂¹⁰, -SR¹⁰, -OSiR₃¹⁰ -SiR₃¹⁰ oder -PR₂¹⁰-Rest bedeuten, worin R¹⁰ ein Halogenatom, eine C₁-C₁₀-Alkylgruppe oder eine C₆-C₁₀-Arylgruppe ist.
- R⁵ und R⁶: gleich oder verschieden sind und die für R³ und R⁴ genannte Bedeutung haben, mit der Maßgabe, daß R⁵ und R⁶ nicht Wasserstoff sind.
- R⁷: 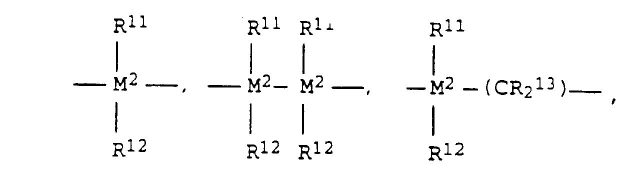 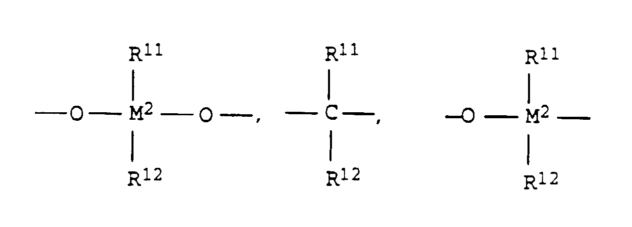 =BR¹¹, =AlR¹¹, -Ge-, -Sn-, -O-, -S-, =SO, =SO₂, =NR¹¹, =CO, =PR¹¹ oder =P-(O)R¹¹ ist,
wobei
- R¹¹, R¹² und R¹³: gleich oder verschieden sind und ein Wasserstoffatom, ein Halogenatom, eine C₁-C₁₀-Alkylgruppe, eine C₁-C₁₀-Fluoralkylgruppe, eine C₆ C₁₀-Arylgruppe, eine C₆-C₁₀-Fluorarylgruppe, eine C₁-C₁₀-Alkoxygruppe, eine C₂-C₁₀-Alkenylgruppe, eine C₇-C₄₀-Arylalkylgruppe, eine C₈ C₄₀-Arylalkenylgruppe, eine C₇-C₄₀-Alkylarylgruppe bedeuten oder R¹¹ und R¹² oder R¹¹ und R¹³ jeweils mit den sie verbindenden Atomen einen Ring bilden,
- M²: Silizium, Germanium oder Zinn ist,
- R⁸ und R⁹: gleich oder verschieden sind und die für R¹¹ genannte Bedeutung haben und
- m und n: gleich oder verschieden sind und null, 1 oder 2 sind, wobei m plus n null, 1 oder 2 ist,
unterschiedliche Metallocenkomplexe von Metallen der IV. und V. Nebengruppe des Periodensystems und oligomere Aluminiumoxidverbindungen enthalten. Bevorzugt sind dabei Metallocenkomplexe von Titan, Zirkonium, Hafnium, Vanadium, Niob oder Tantal.

Vorzugsweise werden dabei solche Komplexverbindungen verwendet, bei denen das Metallatom über π-Bindungen mit ungesättigten cyclischen Kohlenwasserstoffresten verbunden ist, beispielsweise Cyclopentadienyl-, Fluorenyl- oder Indenylgruppen. Weiterhin sind die bevorzugt eingesetzten Komplexverbindungen dadurch gekennzeichnet, daß das Metallatom noch mit weiteren Liganden, insbesondere mit Fluor, Chlor, Brom und Iod oder einem C₁- bis C₁₀-Alkyl, beispielsweise einer Methyl-, Ethyl-, Propyl- oder Butylgruppe, verknüpft sein kann.

Besonders geeignete Metallocenkomplexe lassen sich durch folgende allgemeine Formel V kennzeichnen: 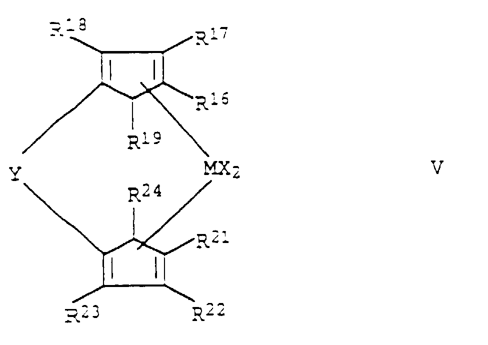 in der die Substituenten folgende Bedeutung haben:
- M: Titan, Zirkonium, Hafnium, Vanadium, Niob oder Tantal,
- X: Fluor, Chlor, Brom, Iod, Wasserstoff, C₁- bis C₁₀-Alkyl, C₆- bis C₁₅-Aryl oder -OR²⁰,
- wobei R²⁰: C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeutet,
- R¹⁶ bis R¹⁹: und R²¹ bis R²⁴ Wasserstoff, C₁- bis C₁₀-Alkyl, 5- bis 7-gliedriges Cycloalkyl, das seinerseits C₁- bis C₁₀-Alkyle als Substituenten tragen kann, C₆- bis C₁₅-Aryl oder Arylalkyl, wobei gegebenenfalls auch zwei benachbarte Reste gemeinsam für 4 bis 15 C-Atome aufweisende cyclische gesättigte, teilweise gesättigte oder ungesättigte Gruppen stehen können, oder Si(R²⁵)₃ mit
- R²⁵: C₁- bis C₁₀-Alkyl, C₆- bis C₁₅-Aryl oder C₃- bis C₁₀-Cycloalkyl,
- Y: für R²⁶R²⁷Z〈 oder 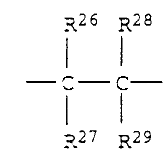 steht,
- wobei Z: Silicium, Germanium, Zinn oder Kohlenstoff bedeutet,
- R²⁶,R²⁷,R²⁸,R²⁹: Wasserstoff, C₁- bis C₁₀-Alkyl, C₃- bis C₁₀-Cycloalkyl oder C₆- bis C₁₅-Aryl, wobei gegebenenfalls auch zwei benachbarte Reste gemeinsam für 4 bis 15 C-Atome aufweisende cyclische Gruppen stehen können.
Von den Verbindungen der Formel V sind diejenigen besonders geeignet, in denen
- R¹⁶ und 21: gleich sind und für Wasserstoff oder C₁- bis C₁₀-Alkylgruppen stehen,
- R¹⁹ und R²⁴: gleich sind und für Wasserstoff, eine Methyl-, Ethyl-, iso-Propyl- oder tert.-Butylgruppe stehen,
- R¹⁷, R¹⁸, R²²: und R²³ die Bedeutung R¹⁸ und R²³ C₁- bis C₄-Alkyl R¹⁷ und R²² Wasserstoff haben oder zwei benachbarte Reste R¹⁷ und R¹⁸ sowie R²² und R²³ gemeinsam für 4 bis 12 C-Atome aufweisende cyclische Gruppen stehen,
- R²⁶,R²⁷,R²⁸ und R²⁹: für Wasserstoff oder C₁ bis C₈-Alkyl,
- M: für Zirkonium oder Hafnium und
- X: für Chlor stehen.

Beispiele für besonders geeignete Komplexverbindungen sind u.a.
Dimethylsilandiylbis(cyclopentadienyl)-zirkoniumdichlorid,
Dimethylsilandiylbis(indenyl)-zirkoniumdichlorid,
Dimethylsilandiylbis(tetrahydroindenyl)-zirkoniumdichlorid,
Ethylenbis(cyclopentadienyl)-zirkoniumdichlorid,
Ethylenbis(indenyl)-zirkoniumdichlorid,
Ethylenbis(tetrahydroindenyl)-zirkoniumdichlorid,
Ethylenbis(-2-methylindenyl)-zirkoniumdichlorid,
Ethylenbis(-2-methylindenyl)-hafniumdichlorid,
Ethylenbis(-2-methylbenzindenyl)-zirkoniumdichlorid,
Ethylenbis(-2-methylbenzindenyl)-hafniumdichlorid,
Dimethylsilandiylbis(-3-tert.butyl-5-methylcyclopentadienyl)-zirkoniumdichlorid,
Dimethylsilandiylbis(-3-tert.butyl-5-ethylcyclopentadienyl)-zirkoniumdichlorid,
Dimethylsilandiylbis(-3-tert.butyl-5-methylcyclopentadienyl)-dimethylzirkonium,
Dimethylsilandiylbis(-2-methylindenyl)-zirkoniumdichlorid,
Dimethylsilandiylbis(-2-isopropylindenyl)-zirkoniumdichlorid,
Dimethylsilandiylbis(-2-tert.-butylindenyl)-zirkoniumdichlorid,
Diethylsilandiylbis(-2-methylindenyl)-zirkoniumdibromid,
Dimethylsilandiylbis(-2-methyl-5-methylcyclopentadienyl)-zirkoniumdichlorid,
Dimethylsilandiylbis(-2-ethyl-5-isopropylcyclopentadienyl)-zirkoniumdichlorid,
Dimethylsilandiylbis(-2-methylbenzindenyl)-zirkoniumdichlorid,
Dimethylsilandiylbis(-2-methylindenyl)-hafniumdichlorid und
Isopropylidencyclopentadienylfluorenylzirkoniumdichlorid.

Die Synthese derartiger Komplexverbindungen kann nach an sich bekannten Methoden erfolgen, wobei die Umsetzung der entsprechend substituierten, cyclischen Kohlenwasserstoffanionen mit Halogeniden von Titan, Zirkonium, Hafnium, Vanadium, Niob oder Tantal, bevorzugt ist. Beispiele für entsprechende Herstellungsverfahren sind u.a. im Journal of Organometallic Chemistry, 369 (1989), 359-370 beschrieben.

Die Metallocenkomplexe können auch in kationischer Form vorliegen, wie in der EP-A 277 003 und der EP-A 277 004 beschrieben wird. Weiterhin kann auch µ-Oxo-bis-(chlorobiscyclopentadienyl)-zirkonium als Metallocenkomplex verwendet werden.

Neben den Metallocenkomplexen enthalten die eingesetzten Katalysatorsysteme noch oligomere Aluminiumoxidverbindungen. Geeignet sind beispielsweise offenkettige oder cyclische Alumoxanverbindungen der allgemeinen Formeln VI oder VII 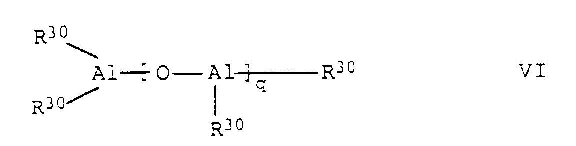 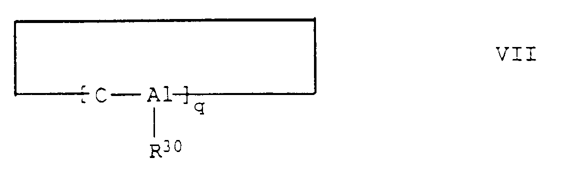 wobei R³⁰ eine C₁- bis C₄-Alkylgruppe, bevorzugt eine Methyl- oder Ethylgruppe bedeutet und q für eine ganze Zahl von 5 bis 30, bevorzugt 10 bis 25, steht.

Die Herstellung dieser oligomeren Alumoxanverbindungen erfolgt üblicherweise durch Umsetzung einer Lösung von Trialkylaluminium mit Wasser und ist u.a. in der EP-A 284 708 und der US-A 4 794 096 beschrieben.

In der Regel liegen die dabei erhaltenen oligomeren Alumoxanverbindungen als Gemische unterschiedlich langer, sowohl linearer als auch cyclischer Kettenmoleküle vor, so daß q als Mittelwert anzusehen ist. Die Alumoxanverbindungen können auch im Gemisch mit anderen Metallalkylen, bevorzugt mit Aluminiumalkylen, vorliegen.

Es hat sich als vorteilhaft erwiesen, die Komplexverbindung von Metallen der IV. und V. Nebengruppe des Periodensystems und die oligomere Alumoxanverbindung in solchen Mengen zu verwenden, daß das atomare Verhältnis zwischen Aluminium aus der oligomeren Alumoxanverbindung und dem Übergangsmetall aus der Komplexverbindung von Metallen der IV. und V. Nebengruppe des Periodensystems im Bereich von 10:1 bis 10⁶:1, insbesondere im Bereich von 10:1 bis 10⁴:1, liegt.

Als Lösungsmittel für diese Katalysatorsysteme werden übliche aromatische Kohlenwasserstoffe eingesetzt, bevorzugt mit 6 bis 20 C-Atomen, insbesondere Xylole und Toluol sowie deren Mischungen.

Weiterhin können auch geträgerte Metallocenkomplexe verwendet werden. Geeignete Trägermaterialien sind beispielsweise Kieselgele, bevorzugt solche der Formel SiO₂ · a Al₂O₃, worin a für eine Zahl im Bereich von 0 bis 2 steht, vorzugsweise 0 bis 0,5; also im wesentlichen Alumosilikate oder Siliciumdioxid. Vorzugsweise weisen die Träger einen Teilchendurchmesser im Bereich von 1 bis 200 µm auf, insbesondere von 30 bis 80 µm. Derartige Produkte sind im Handel erhältlich, z.B. als Silica Gel 332 der Firma Grace.

Neben dem Ziegler-Natta-Katalysatorsystem oder dem metallocenhaltigen Katalysatorsystem wird nach dem erfindungsgemäßen Verfahren noch ein zweites Katalysatorsystem eingesetzt, welches als aktive Bestandteile einen Metallocenkomplex der vorstehend bereits genannten allgemeinen Formel (I) enthält. Das erfindungsgemäße Verfahren wird in einer Reaktionszone durchgeführt.

Bevorzugte Verbindungen der allgemeinen Formel (I) sowie Verfahren zu ihrer Herstellung sind u.a. in der EP-A 537 686 beschrieben.

Neben den Metallocenkomplexen der allgemeinen Formel (I) enthält das eingesetzte Katalysatorsystem zweite noch als aktive Bestandteile oligomere Aluminiumoxidverbindungen der vorstehend genannten allgemeinen Formel (VI) oder (VII). In bezug auf die Mengenverhältnisse der aktiven Bestandteile gilt das bei den anderen metallocenhaltigen Katalysatorsystemen Gesagte. Die Metallocenkomplexe der allgemeinen Formel (I) können ebenfalls in geträgerter Form verwendet werden, wobei die gleichen Träger eingesetzt werden können, wie oben bereits beschrieben.

Das erfindungsgemäße Verfahren kann sowohl in Lösung, in einer Suspension, in der Gasphase oder aber als Substanzpolymerisation durchgeführt werden. Bevorzugt wird das Verfahren zur Herstellung der mehrphasigen Homo- oder Copolymerisate von C₂-C₁₀-Alk-1-enen in der Gasphase durchgeführt. Die Polymerisationsbedingungen sind an sich unkritisch; Drücke von 0,5 bis 3000 bar, bevorzugt von 1 bis 80 bar und Temperaturen von -50 bis -300°C, bevorzugt von -20 bis 100°C haben sich als geeignet erwiesen. Die Polymerisation kann in Anwesenheit von üblichen Reglern, beispielsweise Wasserstoff oder C₂-C₈-Alk-1-enen und in üblichen Polymerisationsreaktoren durchgeführt werden.

Nach dem erfindungsgemäßen Verfahren können die einzelnen Katalysatorsysteme in unterschiedlichen Mengenverhältnissen eingesetzt werden. Bevorzugt werden solche Mengenverhältnisse gewählt, daß das gebildete Polymerisat aus 5 bis 70 Gew.-% des mit dem metallocenhaltigen Katalysatorsystem der Formel (I) erhaltenen Homo- oder Copolymerisats und aus 30 bis 95 Gew.-% des mit dem anderen Katalysatorsystem erhaltenen Homo- oder Copolymerisats zusammengesetzt ist.

Mit Hilfe des erfindungsgemäßen Verfahrens ist es möglich, mehrphasige Homo- oder Copolymerisate von C₂-C₁₀-Alk-1-enen auf verfahrenstechnisch einfache Weise und ohne großen apparativen Aufwand herzustellen. Das erfindungsgemäße Verfahren eignet sich zur Herstellung der verschiedensten mehrphasigen Homo- oder Copolymerisate von C₂-C₁₀-Alk-1-enen. Diese können zur Herstellung von Folien, Fasern oder Formkörpern eingesetzt werden und sind gut verarbeitbar.

### Beispiele

### Beispiel 1

### 1.1 Herstellung eines Trägermaterials

Zu einer Suspension von 20,2 g Kieselgel (Fa. Grace, SG 332, Teilchendurchmesser 20-45 µm) in 200 ml Heptan wurden bei Raumtemperatur während 30 min 56 ml einer Lösung von 6,4 g Triethylaluminium in 48 ml Heptan zugetropft. Dabei stieg die Temperatur auf 44°C an. Nach 18 Stunden Rühren bei Raumtemperatur wurde abfiltriert, zweimal mit je 30 ml Heptan und zweimal mit je 30 ml Pentan gewaschen und anschließend am Ölpumpenvakuum getrocknet.

### 1.2 Trägerung der Katalysatorsysteme

Zu einer Lösung aus 30 ml Toluol, 40 µmol Dimethylsilandiyl-bis (2-methylbenzo[e]indenyl)zirkondichlorid (≙ 23 mg) und 25 µmol rac[1,2-Ethandiylbis{1-(4,7-dimethyl-4,5,6,7-tetrahydroindenyl)}]zirkondichlorid (≙ 12 mg) wurden 17 ml (≙ 26 mmol) einer Lösung von Methylalumoxan in Toluol (1,53 molar, Fa. Witco) gegeben und 15 Minuten gerührt. Anschließend wurden 5 g des in 1.1 hergestellten Trägermaterials zugegeben und weitere 30 Minuten gerührt. Zuletzt wurde das Lösungsmittel bei Raumtemperatur während 4 Stunden am Ölpumpenvakuum entfernt. Es entstand ein gutrieselfähiges Katalysatorpulver aus zwei Metallocen-Katalysatorsystemen.

### 1.3 Polymerisation

In einem trockenen, mit Stickstoff gespülten 10-Liter-Autoklaven wurden nacheinander 20 g Polypropylengrieß und 12 ml Triethylaluminium (1 molare Lösung in Heptan) gegeben und 15 min gerührt. Anschließend wurden 1,5 g des in 1.2 hergestellten Trägerkatalysators im Stickstoff-Gegenstrom in den Reaktor gefüllt und dieser verschlossen. Bei einer Rührerdrehzahl von 350 U/min wurde auf 70°C aufgeheizt und gleichzeitig der Innendruck stufenweise durch Propylenzufuhr bis zum Enddruck von 28 bar erhöht. Anschließend wurde 1,5 Stunden lang polymerisiert, wobei durch die automatische Druckregelung Frischpropylen nachgeführt wurde. Nach beendeter Reaktion wurde während 10 min auf Atmosphärendruck entspannt und das entstandene Polymere, welches aus zwei unterschiedlichen Propylenhomopolymerisaten bestand, im Stickstoffstrom ausgetragen. Die entsprechenden Polymerisationsergebnisse sind in der Tabelle aufgelistet.

### Beispiel 2

### 2.1 Metallocenhaltiges Katalysatorsystem der Formel (II)

Entsprechend dem im Beispiel 1.2 beschriebenen Verfahren wurden 60 µmol rac[1,2-Ethandiylbis{1-(4,7-dimethyl-4,5,6,7-tetrahydroindenyl)}]zirkondichlorid (≙ 29 mg) und 16 ml einer 1,53 molaren Lösung von Methylalumoxan (≙ 24 mmol) in Toluol eingesetzt.

### 2.2 Ziegler-Natta-Katalysatorsystem

20 g SiO₂ ("SG 332" der Firma Grace mit einem Teilchendurchmesser von 20 bis 45 µm) wurden in 200 ml n-Heptan suspendiert und bei 20°C mit 25,33 ml n-Butyl-n-Octyl-Magnesium versetzt. Die Suspension wurde bis zum Rückfluß erhitzt und 30 Minuten lang auf Rückfluß gehalten. Nach anschließendem Abkühlen der Suspension auf Raumtemperatur wurde beginnend bei 60°C zwei Stunden lang mit überschüssigem HCl chloriert und danach wurden bei Raumtemperatur 19,41 ml Ethanol hinzugefügt. Das Gemisch wurde zunächst 30 Minuten am Rückfluß gehalten und nach erneutem Abkühlen auf 25°C mit 17,07 ml Titantetrachlorid versetzt, anschließend erneut auf 60°C erhitzt und bei dieser Temperatur mit 2,94 ml Di-n-butylphthalsäureester versetzt. Das Gemisch wurde eine Stunde lang am Rückfluß gehalten. Die daraus resultierende Suspension wurde filtriert und mit 160 ml Ethylbenzol gewaschen. Nach Trocknung erhielt man 29,2 g der Katalysatorvorstufe.

Die erhaltene Katalysatorvorstufe wurde in einer heizbaren Extraktionsfritte unter Rühren 60 Minuten lang mit einem Gemisch aus 450 ml Ethylbenzol und 50 ml Titantetrachlorid bei einer Manteltemperatur von 125°C extrahiert. Der Katalysator wurde anschließend dreimal mit jeweils 120 ml n-Hexan und einmal mit 120 ml n-Pentan gewaschen und im Stickstoffstrom getrocknet. Der Katalysator enthielt 2,0 Gew.-% Magnesium.

Die titanhaltige Feststoffkomponente wurde danach zunächst einer Vorpolymerisation unterworfen und anschließend inaktiviert. Dazu wurden in einem mit einem Rührer versehenen 1 l-Glasautoklaven 700 ml n-Heptan vorgelegt und das Reaktionsgefäß auf eine Innentemperatur von 5°C abgekühlt. Zu dem Lösungsmittel wurden 47,4 ml Triethylaluminium (in Form einer 1,0-molaren Lösung in n-Heptan) und 6,26 ml Dimethoxyisobutylisopropylsilan (in Form einer 1,0-molaren Lösung in n-Heptan) zugegeben. Anschließend wurden 20 g der hergestellten titanhaltigen Feststoffkomponente zugegeben. Unter Rühren wurde dann kontinuierlich über ein Einleitungsrohr eine Stunde lang gasförmiges Propylen (Durchflußmenge: 40 l/h) bei einem Druck von 1 bar eingeleitet. Während der Propylenzufuhr wurde die Innentemperatur zwischen 5°C und 20°C gehalten. Nach erfolgter Propylenzufuhr wurde dann kontinuierlich unter Rühren über ein Einleitungsrohr 1 Stunde lang gasförmiges, trockenes CO₂ (Durchflußmenge: 14,5 l/h bei einem Druck von 1 bar) in die Katalysatorsuspension eingeleitet. Dadurch wurde die polymerisationsaktive Katalysatorsuspension inaktiviert.

Man erhielt 90 g eines Feststoffes, der 3,1 Gewichtsteile Polypropylen auf ein Gewichtsteil Katalysatorfeststoff enthielt.

Der dabei resultierende Feststoff ist das Ziegler-Natta-Katalysatorsystem.

### 2.3 Polymerisation

Die Polymerisation des Propylens wurde analog dem Beispiel 1.3 in einer Reaktionszone in Anwesenheit von 1,3 g des nach dem Beispiel 2.2 hergestellten Ziegler-Natta-Katalysatorsystems und 0,5 g des im Beispiel 2.1 beschriebenen metallocenhaltigen Katalysatorsystems durchgeführt. Die entsprechenden Polymerisationsergebnisse sind in der nachfolgenden Tabelle aufgelistet.

### Beispiel 3

### 3.1 Trägerung der Katalysatorsysteme

Analog zu dem in 1.2 beschriebenen Verfahren wurden 25 µmol rac[1,2-Ethandiylbis{1-(4,7-dimethyl-4,5,6,7-tetrahydroindenyl)}]zirkondichlorid (≙ 12 mg) in 20 ml Toluol gelöst und zu 6,5 ml (≙ 10 mmol) einer Lösung von Methylalumoxan in Toluol (1,53 molar, Fa. Witco) gegeben und 15 Minuten gerührt. Anschließend wurden 5 g des in 2.2 hergestellten Ziegler-Natta-Katalysatorsystems zugegeben und weitere 30 Minuten gerührt. Zuletzt wurde das Lösungsmittel bei Raumtemperatur während 4 Stunden am Ölpumpenvakuum entfernt. Es entstand ein gut rieselfähiges Katalysatorpulver aus einem Ziegler-Natta- und einem Metallocen-Katalysatorsystem.

### 3.2 Polymerisation

Die Polymerisation wurde mit 1,5 g des in 3.1 hergestellten Trägerkatalysators analog zu dem in 1.3 beschriebenen Verfahren durchgeführt. Die entsprechenden Polymerisationsergebnisse sind in der Tabelle aufgeführt.

### Beispiel 4

Analog dem Beispiel 1.3 wurde die Polymerisation eines Gemisches aus Propylen und Ethylen in Anwesenheit von 1,5 g im Beispiel 1.2 erhaltenen Katalysatorsystems in einer Reaktionszone und in der Gasphase durchgeführt. Das Katalysatorsystem des Beispiels 1.2 enthielt sowohl ein übliches von der Formel (II) verschiedenes metallocenhaltiges Katalysatorsystem als auch ein metallocenhaltiges Katalysatorsystem der Formel (II). Es wurde dabei ein gasförmiges Gemisch aus 99 % Propylen und 1 % Ethylen polymerisiert. Durch eine entsprechende Regelung war gewährleistet, daß jeweils die gewählte Gaszusammensetzung zugeführt wurde.

Die Schmelzpunkte und Glastemperaturen der erhaltenen Polymerisatkomponenten A und B wurden mittels DSC-Messungen (10°C/1 min Aufheizrate) bestimmt. Bei allen Proben wurden jeweils zwei Schmelzpunkte und zwei Glastemperaturen gefunden, die zwei Polymerisatkomponenten A und B zugeordnet werden konnten. Die Komponente B war dabei stets das Polymerisat, welches sich am metallocenhaltigen Katalysatorsystem der allgemeinen Formel (II) bildete.

Der G-Modul wurde nach DIN 53 445 und die Charpy-Schlagzähigkeiten aₙ nach DIN 53 453 bestimmt.

Die Produktivitäten [g/g Kat · h] beziehen sich auf die Gesamtmenge des Katalysators, also auf die Summe der Menge der beiden unterschiedlichen Katalysatorsysteme.

Die Trennung nach TREF (Temperature Rising Elution Fractionation) diente dazu, die jeweiligen Anteile der Polymerisate A)[gebildet am Ziegler-Natta-Katalysatorsystem oder am metallocenhaltigen Katalysatorsystem, das von dem der Formel (I) oder (II) verschieden ist] und der des Polymerisats B [gebildet am metallocenhaltigen Katalysatorsystem der Formel (I) oder (II)] zu ermitteln. Dazu wurden mit Hilfe von Xylol bei unterschiedlichen, steigenden Temperaturen Fraktionen aus dem gesamten Polymerisat herauseluiert. Die Fraktion, die man bei 80°C erhielt, entsprach dem Polymerisat B, die gesammelte Fraktion, die man bei 100°C und 130°C eluierte, dem Polymerisat A (US-A 50 30 713; L. Wild "Advances in Polymer Science" 98, Seite 1-47 [1990]).

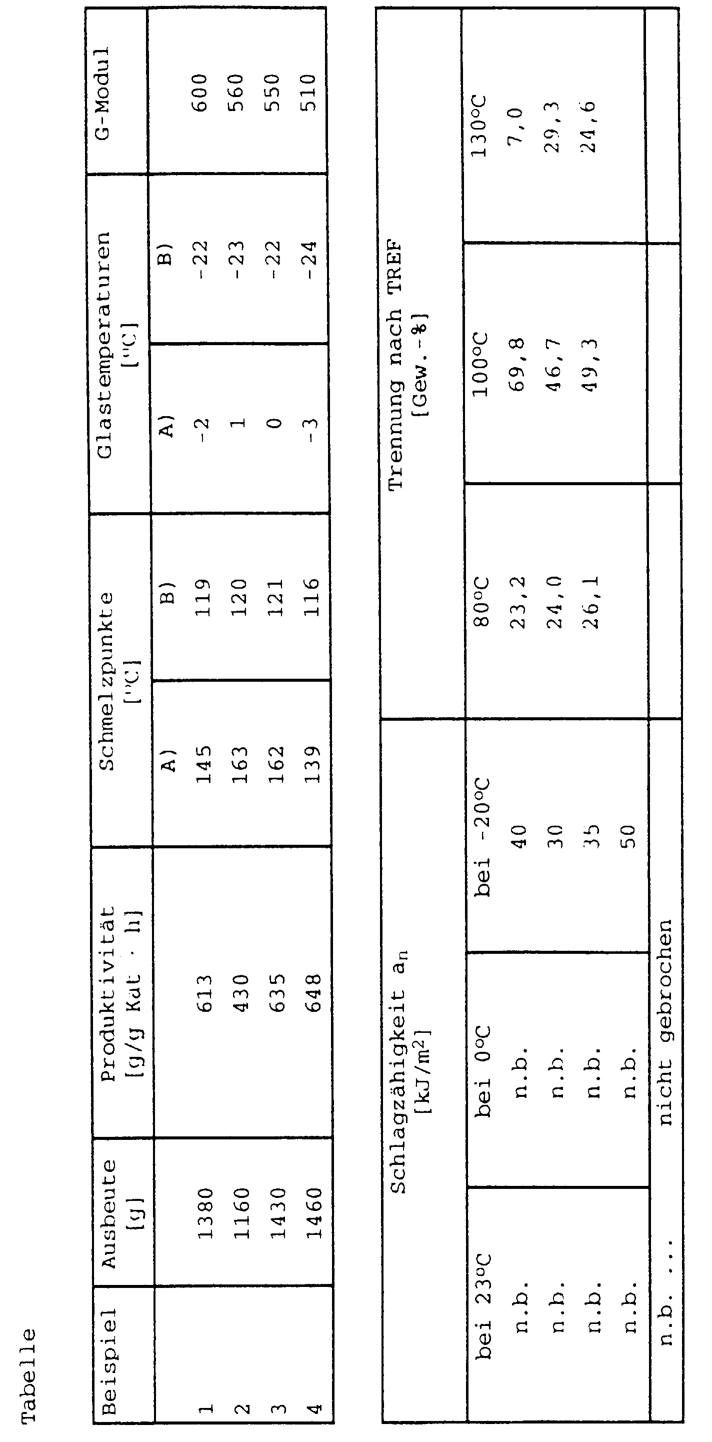

## Patentansprüche

1. Verfahren zur Herstellung von mehrphasigen Homo- oder Copolymerisaten von C₂-C₁₀-Alk-1-enen, dadurch gekennzeichnet, daß in Anwesenheit zweier unterschiedlicher Katalysatorsysteme in einer Reaktionszone polymerisiert wird, wobei eines der Katalysatorsysteme als aktive Bestandteile einen Metallocenkomplex der allgemeinen Formel (I) 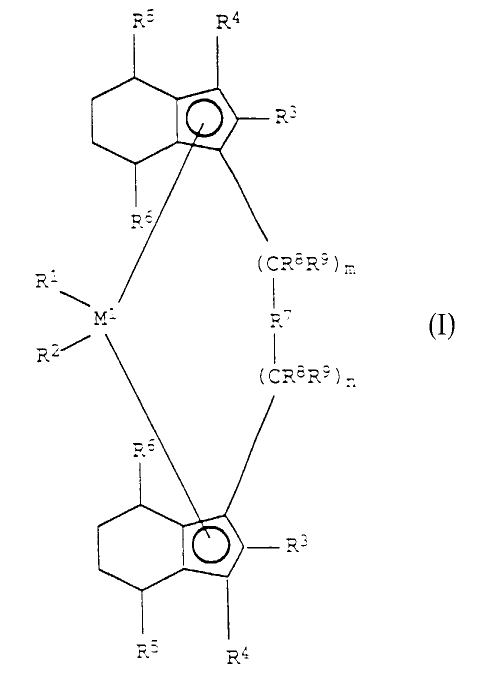 worin
M¹ ein Metall der Gruppe IVb, Vb oder VIb des Periodensystems ist,
R¹ und R² gleich oder verschieden sind und ein Wasserstoffatom, eine C₁-C₁₀-Alkylgruppe, eine C₁-C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe, eine C₈-C₄₀-Arylalkenylgruppe oder ein Halogenatom bedeuten,
R³ und R⁴ gleich oder verschieden sind und ein Wasserstoffatom, ein Halogenatom, eine C₁-C₁₀-Alkylgruppe, die halogeniert sein kann, eine C₆-C₁₀-Arylgruppe, einen -NR₂¹⁰, -SR¹⁰, -OSiR₃¹⁰ -SiR₃¹⁰ oder -PR₂¹⁰-Rest bedeuten, worin R¹⁰ ein Halogenatom, eine C₁-C₁₀-Alkylgruppe oder eine C₆-C₁₀-Arylgruppe ist.
R⁵ und R⁶ gleich oder verschieden sind und die für R³ und R⁴ genannte Bedeutung haben, mit der Maßgabe, daß R⁵ und R⁶ nicht Wasserstoff sind.
R⁷ 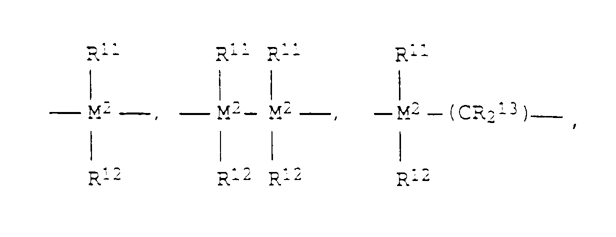 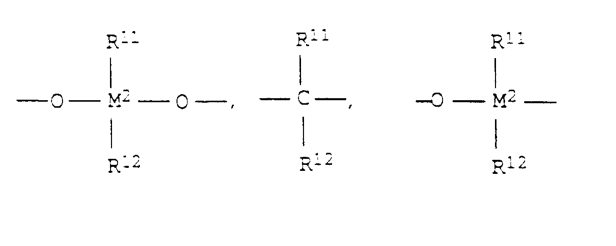 =BR¹¹, =AlR¹¹, -Ge-, -Sn-, -O-, -S-, =SO, =SO₂, =NR¹¹, =CO, =PR¹¹ oder =P-(O)R¹¹ ist,
wobei
R¹¹, R¹² und R¹³ gleich oder verschieden sind und ein Wasserstoffatom, ein Halogenatom, eine C₁-C₁₀-Alkylgruppe, eine C₁-C₁₀-Fluoralkylgruppe, eine C₆ C₁₀-Arylgruppe, eine C₆-C₁₀-Fluorarylgruppe, eine C₁-C₁₀-Alkoxygruppe, eine C₂-C₁₀-Alkenylgruppe, eine C₇-C₄₀-Arylalkylgruppe, eine C₈ C₄₀-Arylalkenylgruppe, eine C₇-C₄₀-Alkylarylgruppe bedeuten oder R¹¹ und R¹² oder R¹¹ und R¹³ jeweils mit den sie verbindenden Atomen einen Ring bilden,
M² Silizium, Germanium oder Zinn ist,
R⁸ und R⁹ gleich oder verschieden sind und die für R¹¹ genannte Bedeutung haben und
m und n gleich oder verschieden sind und null, 1 oder 2 sind, wobei m plus n null, 1 oder 2 ist,
und eine oligomere Aluminiumoxidverbindung enthält.

2. Verfahren nach Anspruch 1, dadurch gekennzeichnet, daß als anderes Katalysatorsystem ein Ziegler-Natta-Katalysatorsystem eingesetzt wird.

3. Verfahren nach Anspruch 1, dadurch gekennzeichnet, daß das andere Katalysatorsystem als aktive Bestandteile von der allgemeinen Formel (I) und von der allgemeinen Formel (II) 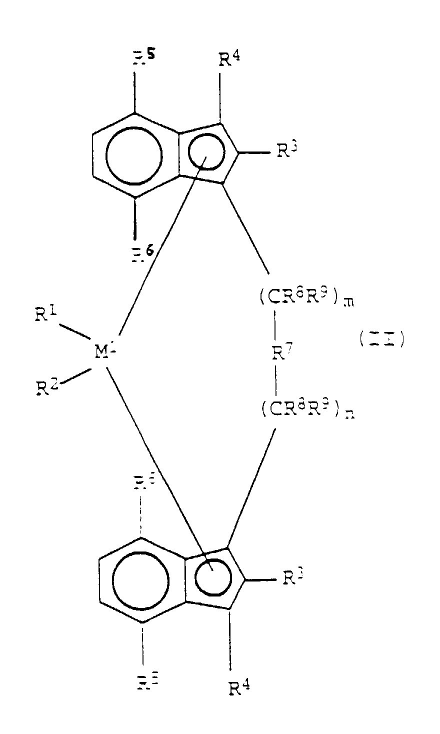 worin
M¹ ein Metall der Gruppe IVb, Vb oder VIb des Periodensystems ist,
R¹ und R² gleich oder verschieden sind und ein Wasserstoffatom, eine C₁-C₁₀-Alkylgruppe, eine C₁-C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe, eine C₈-C₄₀-Arylalkenylgruppe oder ein Halogenatom bedeuten,
R³ und R⁴ gleich oder verschieden sind und ein Wasserstoffatom, ein Halogenatom, eine C₁-C₁₀-Alkylgruppe, die halogeniert sein kann, eine C₆-C₁₀-Arylgruppe, einen -NR₂¹⁰, -SR¹⁰, -OSiR₃¹⁰ -SiR₃¹⁰ oder -PR₂¹⁰-Rest bedeuten, worin R¹⁰ ein Halogenatom, eine C₁-C₁₀-Alkylgruppe oder eine C₆-C₁₀-Arylgruppe ist,
R⁵ und R⁶ gleich oder verschieden sind und die für R³ und R⁴ genannte Bedeutung haben, mit der Maßgabe, daß R⁵ und R⁶ nicht Wasserstoff sind.
R⁷ 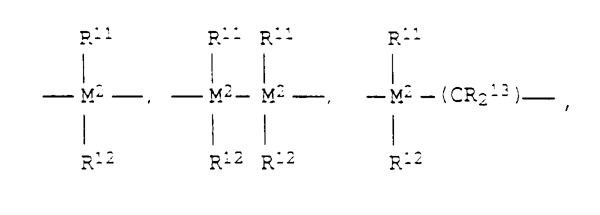 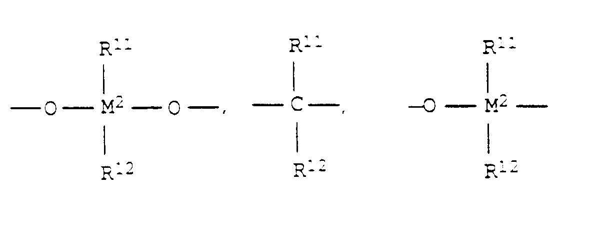 =BR¹¹, =AlR¹¹, -Ge-, -Sn-, -O-, -S-, =SO, =SO₂, =NR¹¹, =CO, =PR¹¹ oder =P-(O)R¹¹ ist,
wobei
R¹¹, R¹² und R¹³ gleich oder verschieden sind und ein Wasserstoffatom, ein Halogenatom, eine C₁-C₁₀-Alkylgruppe, eine C₁-C₁₀-Fluoralkylgruppe, eine C₆-C₁₀ Arylgruppe, eine C₆-C₁₀-Fluorarylgruppe, eine C₁ C₁₀-Alkoxygruppe, eine C₂-C₁₀-Alkenylgruppe, eine C₇-C₄₀-Arylalkylgruppe, eine C₈-C₄₀-Arylalkenylgruppe, eine C₇-C₄₀-Alkylarylgruppe bedeuten oder R¹¹ und R¹² oder R¹¹ und R¹³ jeweils mit den sie verbindenden Atomen einen Ring bilden,
M² Silizium, Germanium oder Zinn ist,
R³ und R⁹ gleich oder verschieden sind und die für R¹¹ genannte Bedeutung haben und
m und n gleich oder verschieden sind und null, 1 oder 2 sind, wobei m plus n null, 1 oder 2 ist,
unterschiedliche Metallocenkomplexe von Metallen der IV. und V. Nebengruppe des Periodensystems und oligomere Aluminiumoxidverbindungen enthält.

4. Verfahren nach den Ansprüchen 1 bis 3, dadurch gekennzeichnet, daß die Herstellung der mehrphasigen Homo- oder Copolymerisate von C₂-C₁₀-Alk-1-enen in der Gasphase erfolgt.

5. Verfahren nach den Ansprüchen 1 bis 4, dadurch gekennzeichnet, daß die Herstellung der mehrphasigen Homo- oder Copolymerisate von C₂-C₁₀-Alk-1-enen bei Temperaturen von -20 bis 100°C und Drücken von 1 bis 80 bar erfolgt.

6. Verwendung der gemäß den Ansprüchen 1 bis 5 erhaltenen mehrphasigen Homo- oder Copolymerisate von C₂-C₁₀-Alk-1-enen zur Herstellung von Folien, Fasern und Formkörpern.

## Claims

1. A process for the preparation of multiphase homo- or copolymers of C₂-C₁₀-alk-1-enes, wherein polymerization is carried out in the presence of two different catalyst systems in one reaction zone, one of the catalyst systems containing, as active components, a metallocene complex of the formula (I) 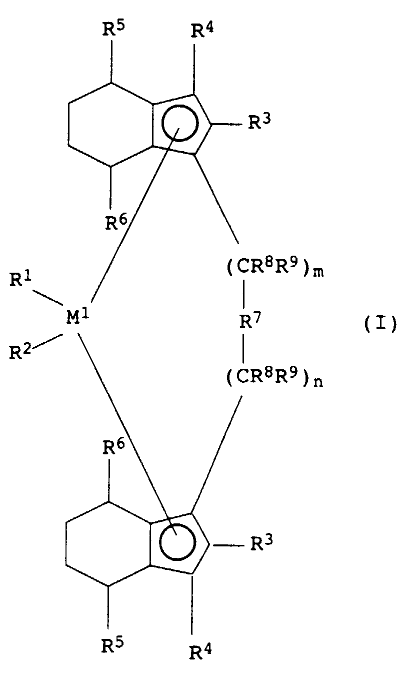 where
M¹ is a metal of group IVb, Vb or VIb of the Periodic Table,
R¹ and R² are identical or different and are each hydrogen, C₁-C₁₀-alkyl, C₁-C₁₀-alkoxy, C₆-C₁₀-aryl, C₆-C₁₀-aryloxy, C₂-C₁₀-alkenyl, C₇-C₄₀-arylalkyl, C₇-C₄₀-alkylaryl, C₈-C₄₀-arylalkenyl or halogen,
R³ and R⁴ are identical or different and are each hydrogen, halogen, C₁-C₁₀-alkyl which may be halogenated, C₆-C₁₀-aryl or an -NR₂¹⁰, -SR¹⁰, -OSiR₃¹⁰, -SiR₃¹⁰ or -PR₂¹⁰ radical, where R¹⁰ is halogen, C₁-C₁₀-alkyl or C₆-C₁₀-aryl,
R⁵ and R⁶ are identical or different and have the meanings stated for R³ and R⁴, with the proviso that R⁵ and R⁶ are not hydrogen,
R⁷ is 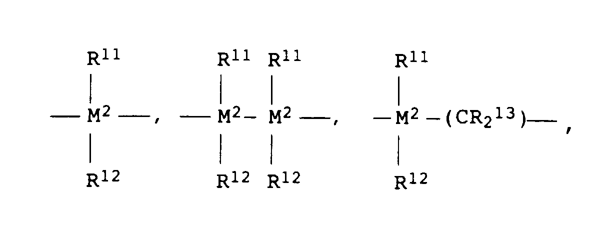 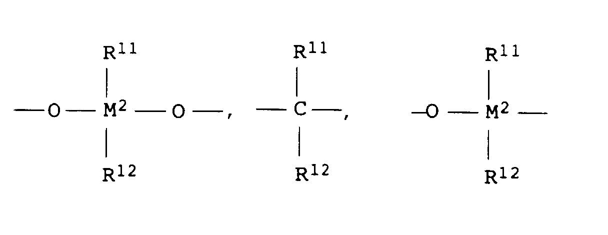 =BR¹¹, =AlR¹¹, -Ge-, -Sn-, -O-, -S-, =SO, =SO₂, =NR¹¹, =CO, =PR¹¹ or =P-(O)R¹¹,
where
R¹¹, R¹² and R¹³ are identical or different and are each hydrogen, halogen, C₁-C₁₀-alkyl, C₁-C₁₀-fluoroalkyl, C₆-C₁₀-aryl, C₆-C₁₀-fluoroaryl, C₁-C₁₀-alkoxy, C₂-C₁₀-alkenyl, C₇-C₄₀-arylalkyl, C₈-C₄₀-arylalkenyl or C₇-C₄₀-alkylaryl, or R¹¹ and R¹² or R¹¹ and R¹³ each form a ring together with the atoms linking them,
M² is silicon, germanium or tin,
R⁸ and R⁹ are identical or different and have the meanings stated for R¹¹ and
m and n are identical or different and are each zero, 1 or 2, m plus n being zero, 1 or 2,
and an oligomeric aluminum oxide compound.

2. A process as claimed in claim 1, wherein a Ziegler-Natta catalyst system is used as another catalyst system.

3. A process as claimed in claim 1, wherein the other catalyst system contains, as active components of the formula (I) 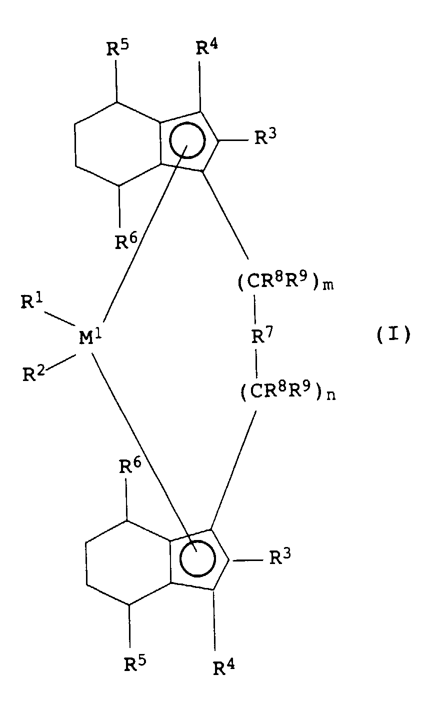 where
M¹ is a metal of group IVb, Vb or VIb of the Periodic Table,
R¹ and R² are identical or different and are each hydrogen, C₁-C₁₀-alkyl, C₁-C₁₀-alkoxy, C₆-C₁₀-aryl, C₆-C₁₀-aryloxy, C₂-C₁₀-alkenyl, C₇-C₄₀-arylalkyl, C₇-C₄₀-alkylaryl, C₈-C₄₀-arylalkenyl or halogen,
R³ and R⁴ are identical or different and are each hydrogen, halogen, C₁-C₁₀-alkyl which may be halogenated, C₆-C₁₀-aryl or an -NR₂¹⁰, -SR¹⁰, -OSiR₃¹⁰, -SiR₃¹⁰ or -PR₂¹⁰ radical, where R¹⁰ is halogen, C₁-C₁₀-alkyl or C₆-C₁₀-aryl,
R⁵ and R⁶ are identical or different and have the meanings stated for R³ and R⁴, with the proviso that R⁵ and R⁶ are not hydrogen,
R⁷ is 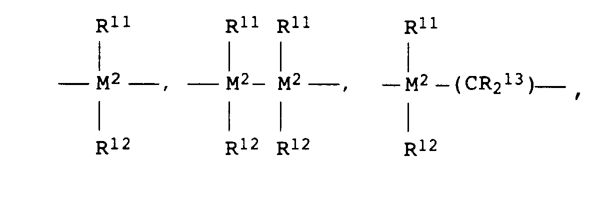 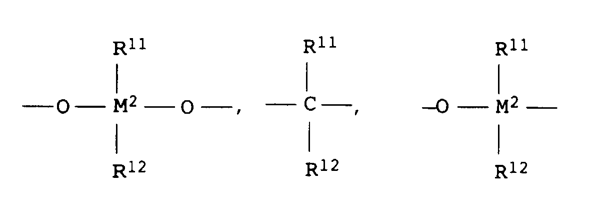 =BR¹¹, =AlR¹¹, -Ge-, -Sn-, -O-, -S-, =SO, =SO₂, =NR¹¹, =CO, =PR¹¹ or =P-(O)R¹¹,
where
R¹¹, R¹² and R¹³ are identical or different and are each hydrogen, halogen, C₁-C₁₀-alkyl, C₁-C₁₀-fluoroalkyl, C₆-C₁₀-aryl, C₆-C₁₀-fluoroaryl, C₁-C₁₀-alkoxy, C₂-C₁₀-alkenyl, C₇-C₄₀-arylalkyl, C₈-C₄₀-arylalkenyl or C₇-C₄₀-alkylaryl, or R¹¹ and R¹² or R¹¹ and R¹³ each form a ring together with the atoms linking them,
M² is silicon, germanium or tin,
R⁸ and R⁹ are identical or different and have the meanings stated for R¹¹ and
m and n are identical or different and are each zero, 1 or 2, m plus n being zero, 1 or 2,
different metallocene complexes of metals of subgroups IV and V of the Periodic Table and oligomeric aluminum oxide compounds.

4. A process as claimed in any of claims 1 to 3, wherein the multiphase homo- or copolymers of C₂-C₁₀-alk-1-enes are prepared in the gas phase.

5. A process as claimed in any of claims 1 to 4, wherein the multiphase homo- or copolymers of C₂-C₁₀-alk-1-enes are prepared at from -20 to 100°C and from 1 to 80 bar.

6. The use of the multiphase homo- or copolymers of C₂-C₁₀-alk-1-enes obtained as claimed in any of claims 1 to 5 for the production of films, fibers and moldings.

## Revendications

1. Procédé de préparation d'homopolymères ou de copolymères multiphase d'alc-1-ènes en C₂ à C₁₀, caractérisé en ce que l'on polymérise en présence de deux systèmes catalytiques différents dans une zone de réaction, où l'un des systèmes catalytiques contient, à titre de constituants actifs, un complexe de métallocène de la formule générale (I) 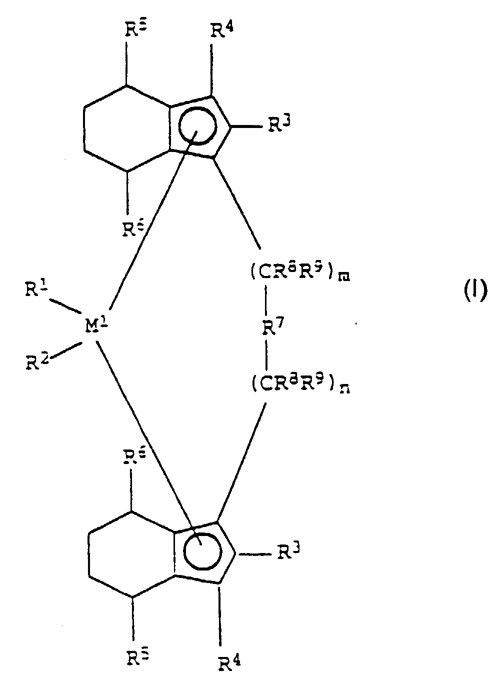 dans laquelle
M¹ représente un métal du groupe IVb, Vb ou Vlb du système périodique,
R¹ et R² sont identiques ou différents et représentent chacun un atome d'hydrogène, un radical alkyle en C₁ à C₁₀, un radical alcoxy en C₁ à C₁₀, un radical aryle en C₆ à C₁₀, un radical aryloxy en C₆ à C₁₀, un radical alcényle en C₂ à C₁₀, un radical arylalkyle en C₇ à C₄₀, un radical alkylaryle en C₇ à C₄₀, un radical arylalcényle en C₈ à C₄₀, ou un atome d'halogène,
R³ et R⁴ sont identiques ou différents et représentent chacun un atome d'hydrogène, un atome d'halogène, un radical alkyle en C₁ à C₁₀, qui peut être halogéné, un radical aryle en C₆ à C₁₀, un radical -NR₂¹⁰, -SR¹⁰, -OSiR₃¹⁰, -SiR₃¹⁰ ou -PR₂¹⁰, où R¹⁰ représente un atome d'halogène, un radical alkyle en C₁ à C₁₀, ou un radical aryle en C₆ à C₁₀^{,}
R⁵ et R⁶ sont identiques ou différents et possèdent chacun les significations attribuées à R³ et R⁴, avec la condition que R⁵ et R⁶ ne représentent pas des atomes d'hydrogène,
R⁷ représente un radical 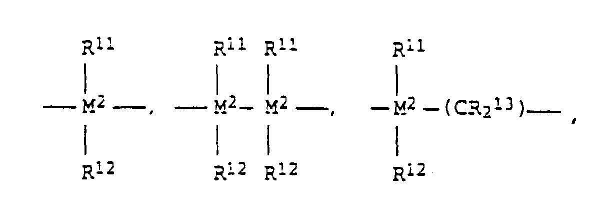 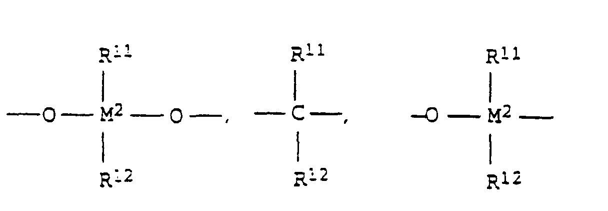 =BR¹¹, =AlR¹¹, -Ge-, -Sn-, -O-, -S-, =SO, =SO₂, =NR¹¹, =CO, =PR¹¹ ou =P-(O)R¹¹
où
R¹¹, R¹² et R¹³ sont identiques ou différents et représentent chacun un atome d'hydrogène, un atome d'halogène, un radical alkyle un radical alkyle en C₁ à C₁₀, un radical fluoralkyle en C₁ à C₁₀, un radical aryle en C₆ à C₁₀, un radical fluoraryle en C₆ à C₁₀, un radical alcoxy en C₁ à C₁₀, un radical alcényle en C₂ à C₁₀, un radical arylalkyle en C₇ à C₄₀, un radical arylalcényle en C₈ à C₄₀, un radical alkylaryle en C₇ à C₄₀, ou bien R¹¹ et R¹² ou R¹¹ et R¹³ forment à chaque fois un cycle avec les atomes qui les relient,
M² représente le silicium, le germanium ou l'étain,
R⁸ et R⁹ sont identiques ou différents et possèdent les significations attribuées à R¹¹ et
m et n sont identiques ou différents et chacun égal à zéro, 1 ou 2, où m plus n est égal à zéro, 1 ou 2,
et un composé d'oxyde d'aluminium oligomérique.

2. Procédé suivant la revendication 1, caractérisé en ce que, comme autre système catalytique, est utilisé un système catalytique de Ziegler-Natta.

3. Procédé suivant la revendication 1, caractérisé en ce que l'autre système catalytique contient, à titre de constituants actif de la formule générale (I) et de la formule générale (Il) 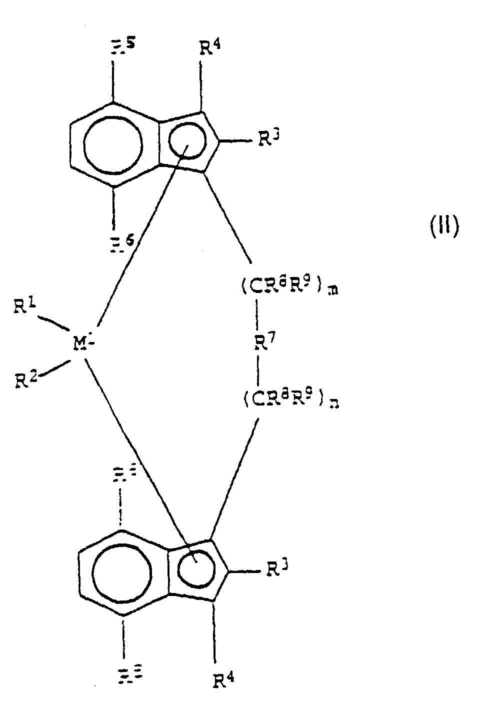 dans laquelle
M¹ représente un métal du groupe IVb, Vb ou Vlb du système périodique,
R¹ et R² sont identiques ou différents et représentent chacun un atome d'hydrogène, un radical alkyle en C₁ à C₁₀, un radical alcoxy en C₁ à C₁₀, un radical aryle en C₆ à C₁₀, un radical aryloxy en C₆ à C₁₀, un radical alcényle en C₂ à C₁₀, un radical arylalkyle en C₇ à C₄₀, un radical alkylaryle en C₇ à C₄₀, un radical arylalcényle en C₈ à C₄₀, ou un atome d'halogène,
R³ et R⁴ sont identiques ou différents et représentent chacun un atome d'hydrogène, un atome d'halogène, un radical alkyle en C₁ à C₁₀, qui peut être halogéné, un radical aryle en C₆ à C₁₀, un radical -NR₂¹⁰, -SR¹⁰, -OSiR₃¹⁰, -SiR₃¹⁰ ou -PR₂¹⁰, où R¹⁰ représente un atome d'halogène, un radical alkyle en C₁ à C₁₀, ou un radical aryle en C₆ à C₁₀,
R⁵ et R⁶ sont identiques ou différents et possèdent chacun les significations attribuées à R³ et R⁴, avec la condition que R⁵ et R⁶ ne représentent pas d'atomes d'hydrogène,
R⁷ représente un radical 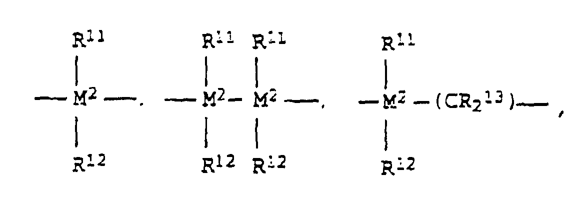 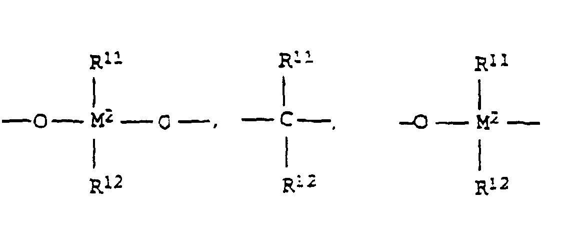 =BR¹¹, =AlR¹¹, -Ge-, -Sn-, -O-, -S-, =SO, =SO₂, =NR¹¹, =CO, =PR¹¹ ou =P-(O)R¹¹
où
R¹¹, R¹² et R¹³ sont identiques ou différents et représentent chacun un atome d'hydrogène, un atome d'halogène, un radical alkyle un radical alkyle en C₁ à C₁₀, un radical fluoralkyle en C₁ à C₁₀, un radical aryle en C₆ à C₁₀, un radical fluoraryle en C₆ à C₁₀, un radical alcoxy en C₁ à C₁₀, un radical alcényle en C₂ à C₁₀, un radical arylalkyle en C₇ à C₄₀, un radical arylalcényle en C₈ à C₄₀, un radical alkylaryle en C₇ à C₄₀, ou bien R¹¹ et R¹² ou R¹¹ et R¹³ forment à chaque fois un cycle avec les atomes qui les relient,
M² représente le silicium, le germanium ou l'étain,
R⁸ et R⁹ sont identiques ou différents et possèdent les significations attribuées à R¹¹ et
m et n sont identiques ou différents et chacun égal à zéro, 1 ou 2, où m plus n est égal à zéro, 1 ou 2,
et un composé d'oxyde d'aluminium oligomérique, des complexes de métallocène différents de métaux des sous-groupes IV et V du système périodique et des composés d'oxyde d'aluminium oligomériques.

4. Procédé suivant l'une quelconque des revendications 1 à 3, caractérisé en ce que la préparation des homopolymères ou des copolymères multiphase d'alc-1-ènes en C₂ à C₁₀ s'effectue en phase gazeuse.

5. Procédé suivant l'une quelconque des revendications 1 à 4, caractérisé en ce que la préparation des homopolymères ou des copolymères multiphase d'alc-1-ènes en C₂ à C₁₀ s'effectue à des températures de -20 à 100°C et sous des pressions de 1 à 80 bars.

6. Utilisation des homopolymères ou des copolymères multiphase d'alc-1-ènes en C₂ à C₁₀, obtenus suivant l'une quelconque des revendications 1 à 5, en vue de la fabrication de feuilles, de fibres et d'articles moulés.
